# EUROPEAN PATENT APPLICATION

(11) **EP 4 825 802 A1**
(43) Date of publication of application: **21.10.2026**
(21) Application number: 24904092.4
(22) Date of filing: 28.11.2024
(51) Int. Cl.: C01D 7/18, C01F 11/46

(54) **MANUFACTURING MATERIAL OF SODIUM BICARBONATE AND GYPSUM AND MANUFACTURING METHOD FOR SODIUM BICARBONATE AND GYPSUM USING SAME**

(30) Priority: 15.12.2023 KR 20230183927
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: MIN, Jung-Gi, Pocheon-si, Gyeonggi-do 11185 (KR); BYUN, Young-Chul, Gwangyang-si, Jeollanam-do 57798 (KR); LEE, Young-Bong, Gwangyang-si, Jeollanam-do 57809 (KR); KIM, Hwan-Ki, Gwangju 61135 (KR); HA, Jae-Hyeok, Ulsan 44481 (KR)
(74) Representative: Pfenning, Meinig & Partner mbB
(86) International application number: PCT/KR2024/019098
(87) International publication number: WO 2025/127527

(57) **Abstract**

The present invention relates to a manufacturing method for sodium bicarbonate and gypsum, comprising the steps of: preparing sodium bicarbonate (NaHCO₃) by carbonating a raw material including sodium sulfate Na₂SO₄), an impurity leaching inhibitor, and impurities; and preparing gypsum (CaSO₄) by using waste liquid generated in the step of preparing the sodium bicarbonate, wherein the impurity leaching inhibitor includes a sulfur (S)-containing material. According to the present invention, impurities such as mercury (Hg) and lead (Pb) may be prevented from being leached in waste generated during a process of manufacturing sodium bicarbonate and gypsum. Accordingly, as designated waste can now be treated as general waste, a reduction in waste treatment costs can be expected.

## Description

### Technical Field

The present disclosure relates to a material for producing sodium bicarbonate and gypsum containing sodium sulfate, an impurity elution inhibitor, and impurities, and a method for producing sodium bicarbonate and gypsum from the material.

### Background Art

Sodium bicarbonate (NaHCO₃) has been used in various applications, including glass manufacturing, water treatment, and food additives and may also has been used to remove harmful gases, such as sulfur oxides (SOx) emitted from various factories, thermal power plants, and incinerators. Currently, sintering plants at steel mills use sodium bicarbonate as an adsorbent to remove sulfur oxides, and the use of sodium bicarbonate tends to increase annually to meet increasingly stringent environmental regulations. Importing industrial sodium bicarbonate from overseas poses a problem in that the price of sodium bicarbonate imports fluctuates significantly depending on the economic conditions overseas.

A reaction using sodium bicarbonate to remove sulfur oxides produces carbon dioxide and sodium sulfate (Na₂SO₄), and this waste is currently landfilled, resulting in increased disposal costs and secondary environmental problems. Therefore, the development of technologies for sodium bicarbonate regeneration is urgently required.

When sodium sulphate waste is regenerated with sodium bicarbonate, some waste occurs, containing impurities, such as mercury (Hg) and lead (Pb). Waste occurring during the process is classified as designated waste if it does not undergo additional treatment. According to the current Waste Management Act, mercury and lead have to be dissolved at levels below 0.005 mg/L and 3 mg/L, respectively, based on the process test method, to be classified as general waste. These toxic metals, which are harmful to the human body, have to be prevented from leaking and converted to less soluble substances for landfill and storage.

### Disclosure of Invention

### Technical Problem

An aspect of the present disclosure is to provide a method for producing sodium bicarbonate and gypsum suppressing carbon dioxide emissions and recycling sodium sulfate.

An aspect of the present disclosure is to provide a material for producing sodium bicarbonate and gypsum suppressing the elution of impurities, such as mercury and lead, and a method for producing sodium bicarbonate and gypsum using the material.

### Solution to Problem

According to an aspect of the present disclosure, a material for producing sodium bicarbonate and gypsum includes sodium sulfate (Na₂SO₄), an impurity elution inhibitor, and an impurity.

The material may include 0.01 wt% or more and 5 wt% or less of the impurity elution inhibitor based on a total weight of the material.

The impurity elution inhibitor may include 10 wt% or more and 90 wt% or less of a sulfur-containing substance based on a total weight of the impurity elution inhibitor.

The sulfur-containing substance may be one selected from sodium hydrogen sulfide, sodium sulfide, and sodium cellulose xanthate (ICX).

The impurity may include at least one selected from the group consisting of lead (Pb), copper (Cu), arsenic (As), mercury (Hg), cadmium (Cd), chromium (Cr), cyanide (CN), potassium (K), calcium (Ca), iron (Fe), and chlorine (Cl).

According to another aspect of the present disclosure, a method for producing sodium bicarbonate and gypsum includes an operation of carbonating a material including sodium sulfate (Na₂SO₄), an impurity elution inhibitor, and an impurity to produce sodium bicarbonate (NaHCO₃); and an operation of producing gypsum (CaSO₄) using a waste liquid generated in the operation of producing sodium bicarbonate, wherein the impurity elution inhibitor includes a sulfur (S)-containing substance.

The material may include 0.01 wt% or more and 5 wt% or less of impurity elution inhibitor of based on a total weight of the material.

The impurity elution inhibitor may include 10 wt% or more and 90 wt% or less of sulfur-containing substance based on a total weight of the impurity elution inhibitor.

The sulfur-containing substance may be one selected from sodium hydrogen sulfide, sodium sulfide, and sodium cellulose xanthate (ICX).

The impurity may include at least one selected from the group consisting of lead (Pb), copper (Cu), arsenic (As), mercury (Hg), cadmium (Cd), chromium (Cr), cyanide (CN), potassium (K), calcium (Ca), iron (Fe), and chlorine (Cl).

In the operation of producing sodium bicarbonate, a primary waste including 3 mg/L or less of the impurity may be generated.

In the operation of producing gypsum, a secondary waste containing 1.1 mg/L or less of the impurity may be generated.

The operation of producing sodium bicarbonate may include dissolving a desulfurization waste in water and introducing an impurity elution inhibitor to produce a mixture; separating the mixture into a solid and a liquid to obtain the material; and introducing ammonia water and carbon dioxide to the material to carbonate the material to produce sodium bicarbonate.

The operation of producing gypsum may include an operation of introducing a calcium-containing substance to the waste liquid to obtain a slurry; an operation of removing ammonia from the slurry and then adding an acidic solution to obtain a second mixture; and an operation of separating the second mixture into a solid and a liquid to produce gypsum.

### Advantageous Effects of Invention

The method for producing sodium bicarbonate and gypsum using the material for producing sodium bicarbonate and gypsum of the present disclosure may prevent the elution of impurities, such as mercury (Hg) and lead (Pb), from a waste generated during the process of producing sodium bicarbonate and gypsum. Consequently, a designated waste may be treated as a general waste, which may reduce waste disposal costs.

### Brief Description of Drawings

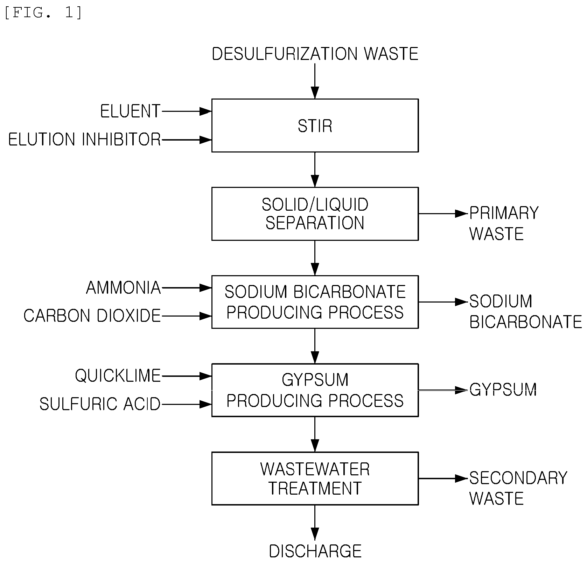

FIG. 1 is a flowchart schematically illustrating a method for producing sodium bicarbonate and gypsum according to an embodiment of the present disclosure.

### Best Mode for the Invention

Hereinafter, preferred embodiments of the present disclosure will be described with reference to various embodiments. However, the embodiments of the present disclosure may be modified in various other ways, and the scope of the present disclosure is not limited to the embodiments described below.

The present disclosure relates to a method for producing sodium bicarbonate and gypsum from a material including sodium sulfate and an impurity elution inhibitor.

Exhaust gases from steel mill sintering plants contain sulfur oxides (SOx) and desulfurization using sodium bicarbonate to remove the sulfur oxides (SOx) generates waste desulfurizing agents. According to the desulfurization process using sodium bicarbonate, one H₂O and one CO₂ are released from two sodium bicarbonate molecules due to heat of exhaust gas so as to be activated as , Na2CO3 having a larger contact area, resulting in the advantage of increased desulfurization efficiency and reduced chemical costs.

2NaHCO₃ (s) a Na₂CO₃ (s) + CO₂ (g) + H₂O (g)

Na₂CO₃ (s) + SO₂ (g) + 1/2O₂ (g) a Na₂SO₄ (s) + CO₂ (g)

However, desulfurization using sodium bicarbonate emits carbon dioxide, as shown in the reaction equation above. Furthermore, removing sulfur oxides using sodium bicarbonate generates waste converted to sodium sulfate (Na₂SO₄).

Because sodium sulfate contains sodium, sodium bicarbonate may be produced from sodium sulfate, and a relatively high pH of sodium sulfate facilitates the dissolution of carbon dioxide (CO₂) required during the sodium bicarbonate production process. Regenerating sodium bicarbonate using sodium sulphate waste may simultaneously address a variety of issues, including minimizing waste generation, achieving carbon neutrality through carbon dioxide reduction, and stabilizing operations through the internal circulation of sodium bicarbonate.

Mercury (Hg) and lead (Pb) are present in waste desulfurizers and are present in the form of mercury chloride (HgCl₂) and lead chloride (PbCl₂) inside waste generated during the sodium bicarbonate and gypsum production processes. Table 1 illustrates the temperature-dependent solubility of impurities, including mercury and lead. The solubility in Table 1 represent the mass (g) of the substance dissolved per 100 mL of water.

**[Table 1]**

| Substance | 20 °C | 40 °C | 60 °C | 80 °C |
|---|---|---|---|---|
| Mercury chloride (HgCl₂) | 6.6 | 10.2 | 16.3 | 30.0 |
| Lead chloride (PbCl₂) | 1.1 | 1.4 | 1.9 | 2.5 |
| Mercury sulfide (HgS) | 2.9 x 10⁻²⁵ | - | - | - |
| Lead sulfide (PbS) | 6.8 x 10⁻¹³ | - | - | - |

As shown in Table 1, mercury chloride and lead chloride have high solubility. Mercury is classified as designated waste if it is eluted at 0.005 mg/L or more, and lead is classified as designated waste if it is eluted at 3 mg/L or more.

Meanwhile, as shown in Table 1, mercury sulfide and lead sulfide have very low solubility and are barely eluted.

The contents of mercury and lead present in the waste desulfurizer are in ppm, and the amount of introduced sulfide ions is also small. To ensure that the introduced sulfide ions react well with the mercury ions (Hg²⁺) and lead ions (Pb²⁺) present in the solution, sulfide ions need to be added during the dissolution of the waste desulfurizer or mixed with other substances in the material.

The method for producing sodium bicarbonate and gypsum of the present disclosure includes an operation of carbonating a material containing sodium sulfate (Na₂SO₄), an impurity elution inhibitor, and impurities to produce sodium bicarbonate (NaHCO₃); and an operation of producing gypsum (CaSO₄) using a waste liquid generated during the operation of producing sodium bicarbonate.

To produce the material, first, a solution may be prepared by dissolving desulfurization waste, including waste desulfurizing agents and sodium sulfate, in an eluent. The eluent may be water (H₂O). When the desulfurization waste is dissolved in water, highly soluble mercury chloride and lead chloride may exist in the solution in the form of mercury (Hg²⁺) and lead (Pb²⁺) ions.

Thereafter, an impurity elution inhibitor may be added to the solution and stirred. The impurity elution inhibitor includes a sulfur (S)-containing substance.

Since the sulfur-containing substance contain sulfide ions (S²⁻), adding the impurity elution inhibitor to the solution may produce mercury sulfide and lead sulfide. The solution has to be alkaline to facilitate the mercury sulfide and lead sulfide production reaction. The waste desulfurizing agent is alkaline pH (pH > 9), which provides good conditions for producing mercury sulfide and lead sulfide.

After stirring, the mixture is separated into a solid and a liquid to obtain a solid desulfurization waste (primary waste) and a material (sodium elution solution).

The material includes sodium sulfate (Na₂SO₄), an impurity elution inhibitor, and impurities.

The impurity elution inhibitor may include a sulfur (S)-containing substance in the amount of 10 wt% or more and 100 wt% or less. Utilizing the impurity elution inhibitor of the present disclosure prevents the elution of mercury, lead, and the like from waste generated during the process. This allows designated waste to be treated as general waste, thereby reducing waste disposal costs.

The sulfur-containing substance may be one selected from sodium hydrogen sulfide, sodium sulfide, and sodium cellulose xanthate (ICX). Sulfide ions may exist in various forms. Considering the purity of sodium bicarbonate, sodium hydrogen sulfide (NaHS), sodium sulfide (Na₂S), and sodium cellulose xanthate (ICX) have the advantage that sodium ions are used as the material for sodium bicarbonate.

The impurities may include at least one selected from the group consisting of sodium sulfate (Na₂SO₄), lead (Pb), copper (Cu), arsenic (As), mercury (Hg), cadmium (Cd), chromium (Cr), cyanide (CN), potassium (K), calcium (Ca), iron (Fe), and chlorine (Cl).

The method for producing sodium bicarbonate and gypsum of the present disclosure includes an operation of carbonating a material to produce sodium bicarbonate (NaHCO₃).

Aqueous ammonia and carbon dioxide may be introduced to the material and reacted in a carbonation reactor to obtain a slurry, and the slurry may then be solid/liquid separated to obtain a solid and a waste liquid. The solid may be washed and dried to produce sodium bicarbonate.

The purity of sodium bicarbonate produced from the operation of producing sodium bicarbonate of the present disclosure may be 97% or higher, and the yield of sodium bicarbonate may be 75% or higher.

In the operation of producing sodium bicarbonate, a primary waste containing 3 mg/L or less of the impurities may be generated. When the impurity content of the primary waste is 3 mg/L or less, the leakage of toxic metals harmful to the human body may be prevented and waste disposal costs may be reduced.

In the operation of producing gypsum, a secondary waste containing 1.1 mg/L or less of the impurities may be generated. When the impurity content of the secondary waste is 1.1 mg/L or less, the leakage of toxic metals harmful to the human body may be prevented and waste disposal costs may be reduced.

The method for producing sodium bicarbonate and gypsum of the present disclosure includes an operation of producing gypsum (CaSO₄) using the waste liquid generated in the operation of producing sodium bicarbonate.

The operation of producing gypsum may include introducing a calcium-containing substance to the waste liquid to obtain a slurry. The calcium-containing substance may be quicklime. After removing ammonia from the slurry, an acidic solution may be added and stirred to obtain a second mixture. The acidic solution may be an aqueous sulfuric acid solution. Alternatively, the slurry may be subjected to solid/liquid separation to obtain a second solid and a second waste liquid. Aeration may be performed on the second waste liquid to remove ammonia, and thereafter, the second solid may be remixed, followed by adding an aqueous sulfuric acid solution and stirring to obtain a third mixture. The second mixture or the third mixture may then be subjected to solid/liquid separation to obtain gypsum and waste water.

Producing gypsum using the waste liquid generated during the operation of producing sodium bicarbonate has the advantages of reducing gypsum production costs by recycling materials and preventing environmental pollution by reducing waste discharge.

The purity of gypsum produced from the operation of producing gypsum of the present disclosure may be 95% or higher, and the yield of gypsum may be 75% or higher.

### Mode for the Invention

### Examples

Hereinafter, the present disclosure will be described in more detail with reference to examples. The following examples are intended to further illustrate the present disclosure and are not intended to limit the present disclosure.

### Example 1

### Operation of Producing Sodium Bicarbonate

99.93 g of desulfurization waste and 200 mL of water were introduced and stirred at 40°C for one hour to prepare a solution. 0.7 g of sodium sulfide (Na₂S) was introduced to the solution as an impurity elution inhibitor, such that the weight ratio of sodium sulfide was 0.7 wt% based on the combined mass of the desulfurization waste and sodium sulfide, and the solution was further stirred at 40°C for one hour. After stirring, the mixture was subjected to solid/liquid separation to obtain a solid desulfurization waste (primary waste) and material (sodium elution solution).

The material preparation process was repeated until 100 g of primary waste was obtained.

100 g of primary waste and 1 L of water were introduced. The pH was adjusted to between 5.8 and 6.3 using hydrochloric acid. The resultant mixture was stirred for six hours at room temperature and atmospheric pressure and then filtered (glass filter GF-B 1 µm) to obtain a filtrate.

For the filtrate, the amount of lead (Pb) was identified using an inductively coupled plasma (ICP) method, and the amount of mercury (Hg) was identified using an atomic absorption (AA) method. The results of the mercury (Hg) and lead (Pb) elution experiments for 100 g of primary waste are shown in Table 2.

Meanwhile, 90 g of 25 to 30 wt% of ammonia water and 100 g of carbon dioxide were introduced to 500 g of the above material, and the mixture was reacted in a carbonation reactor to obtain a slurry. The slurry was subjected to solid/liquid separation to obtain a solid and a waste liquid.

The first solid was washed and dried in a 50°C oven for 12 or more hours to obtain sodium bicarbonate.

The yield and purity of sodium bicarbonate are shown in Table 3. The yield of sodium bicarbonate was calculated based on the Na+ mol of the waste desulfurizer and the produced sodium bicarbonate. The purity of sodium bicarbonate was measured using an ICP device and X-ray powder diffraction (XRD) equipment.

### Operation of Producing Gypsum

350 g of 25% quicklime slurry was introduced to 500 g of the waste liquid obtained in the above sodium bicarbonate producing operation and stirred for an hour. After stirring, the slurry was subjected to solid/liquid separation to obtain a second solid and a second waste liquid.

The second waste liquid was heated to 80°C and aerated using an inert gas to recover NH₃ within the slurry. The second waste liquid, from which NH₃ was removed through aeration, was mixed with the second solid obtained after the solid/liquid separation, to which 110 g of a 30 wt% sulfuric acid aqueous solution was added and stirred. The solid/liquid separation was then performed to obtain gypsum and wastewater.

The yield and purity of gypsum are shown in Table 4. The gypsum yield was calculated based on the SO₄²⁻ mol of the waste desulfurizer and the gypsum produced. The yield of gypsum was measured by ICP, and the purity of gypsum was measured by XRD.

1,000 g of the wastewater obtained from the gypsum production operation was evaporated and concentrated for one hour at a temperature of 80°C or higher and a pressure of 0.1 bar or lower to obtain secondary wastewater.

100 g of secondary wastewater and 1 L of water were introduced. The pH was adjusted to between 5.8 and 6.3 using hydrochloric acid. The resultant mixture was stirred at room temperature and atmospheric pressure for 6 hours and then filtered (glass filter GF-B 1 µm) to obtain a filtrate.

For the filtrate, the amount of lead (Pb) was identified using an ICP method, and the amount of mercury (Hg) was identified using an AA method. The results of the mercury (Hg) and lead (Pb) elution experiments for 100 g of secondary waste are shown in Table 5.

### Examples 2 to 5

Sodium bicarbonate and gypsum were produced using the same method as in Example 1, except that 98.7, 98, 97.7, and 96.7 g of desulfurization waste were added and 1.3, 2.0, 2.3, and 3.3 g of sodium sulfide were added, respectively.

### Comparative Example 1

Sodium bicarbonate and gypsum were produced using the same method as in Example 1, except that 100 g of desulfurization waste was added and sodium sulfide was not introduced.

### Experimental Example

For the filtrate of the primary waste, the amount of lead (Pb) was identified using an ICP method, and the amount of mercury (Hg) was identified using an AA method. The results of the mercury (Hg) and lead (Pb) elution experiments for 100 g of primary waste are shown in Table 2.

**[Table 2]**

| | Na₂S (wt%) | Hg (mg/L) | Pb (mg/L) |
|---|---|---|---|
| Comparative Example 1 | 0.0 | 0.1087 | 3.1221 |
| Example 1 | 0.7 | 0.0031 | 2.1055 |
| Example 2 | 1.3 | 0.0012 | 1.0522 |
| Example 3 | 2.0 | Not detected | Not detected |
| Example 4 | 2.3 | Not detected | Not detected |
| Example 5 | 3.3 | Not detected | Not detected |

In the primary waste from Examples 1 to 5, mercury was detected at 0.005 mg/L or less and lead at 3 mg/L or less.

The yields and purities of sodium bicarbonate of Examples 2 to 5 and Comparative Example 1 are shown in Table 3.

**[Table 3]**

| | Na₂S (wt%) | Purity of sodium bicarbonate (%) | Yield of sodium bicarbonate (%) |
|---|---|---|---|
| Comparative Example 1 | 0.0 | 98.5 | 77 |
| Example 1 | 0.7 | 98.3 | 80 |
| Example 2 | 1.3 | 98.2 | 79 |
| Example 3 | 2.0 | 97.9 | 81 |
| Example 4 | 2.3 | 98.1 | 78 |
| Example 5 | 3.3 | 99.1 | 77 |

It can be seen that there is no difference in the purity and yield of sodium bicarbonate of Comparative Example 1 and Examples 1 to 5. It can be seen that the presence or absence of sodium sulfide does not affect the purity or yield of sodium bicarbonate.

The yield and purity of gypsum of Examples 2 to 5 and Comparative Example 1 are shown in Table 4.

**[Table 4]**

| | Na₂S (wt%) | Purity of gypsum (%) | Yield of gypsum (%) |
|---|---|---|---|
| Comparative Example 1 | 0.0 | 95.2 | 80 |
| Example 1 | 0.7 | 97.1 | 81 |
| Example 2 | 1.3 | 96.3 | 79 |
| Example 3 | 2.0 | 95.1 | 78 |
| Example 4 | 2.3 | 96.1 | 82 |
| Example 5 | 3.3 | 97.3 | 75 |

It can be seen that there is no difference in the gypsum purity and yield between Comparative Example 1 and Examples 1 to 5. The presence or absence of sodium sulfide did not affect gypsum purity or yield.

For the filtrate of the secondary wastes of Examples 2 and 3 and Comparative Example 1, the amount of lead (Pb) was identified using an ICP method, and the amount of mercury (Hg) was identified using an AA method. The results of the mercury (Hg) and lead (Pb) elution experiments for 100 g of secondary waste are shown in Table 5.

**[Table 5]**

| | Na₂S (wt%) | Hg (mg/L) | Pb (mg/L) |
|---|---|---|---|
| Comparative Example 1 | 0.0 | 0.0623 | 2.7922 |
| Example 1 | 0.7 | 0.0122 | 1.0022 |
| Example 2 | 1.3 | 0.0015 | 0.0556 |
| Example 3 | 2.0 | Not detected | Not detected |
| Example 4 | 2.3 | Not detected | Not detected |
| Example 5 | 3.3 | Not detected | Not detected |

It can be seen that, in the wastes of Examples 1 and 2, mercury was detected at 0.005 mg/L or less, and lead at 3 mg/L or less.

While the embodiments of the present disclosure have been described in detail above, the scope of the present disclosure is not limited thereto, and it will be apparent to those skilled in the art that various modifications and variations may be made without departing from the technical spirit of the present disclosure as set forth in the claims.

## Claims

1. A material for producing sodium bicarbonate and gypsum, the material comprising:
sodium sulfate (Na₂SO₄), an impurity elution inhibitor, and an impurity.

2. The material of claim 1, wherein the material includes 0.01 wt% or more and 5 wt% or less of the impurity elution inhibitor based on a total weight of the material.

3. The material of claim 1, wherein the impurity elution inhibitor includes 10 wt% or more and 100 wt% or less of a sulfur-containing substance based on a total weight of the impurity elution inhibitor.

4. The material of claim 3, wherein the sulfur-containing substance is one selected from sodium hydrogen sulfide, sodium sulfide, and sodium cellulose xanthate (ICX).

5. A method for producing sodium bicarbonate and gypsum, the method comprising:
an operation of carbonating a material including sodium sulfate (Na₂SO₄), an impurity elution inhibitor, and an impurity to produce sodium bicarbonate (NaHCO₃); and
an operation of producing gypsum (CaSO₄) using a waste liquid generated in the operation of producing sodium bicarbonate,
wherein the impurity elution inhibitor includes a sulfur (S)-containing substance.

6. The method of claim 5, wherein the material includes 0.01 wt% or more and 5 wt% or less of impurity elution inhibitor of based on a total weight of the material.

7. The method of claim 5, wherein the impurity elution inhibitor includes 10 wt% or more and 100 wt% or less of sulfur-containing substance based on a total weight of the impurity elution inhibitor.

8. The method of claim 5, wherein the sulfur-containing substance is one selected from sodium hydrogen sulfide, sodium sulfide, and sodium cellulose xanthate (ICX).

9. The method of claim 5, wherein the impurity includes at least one selected from the group consisting of lead (Pb), copper (Cu), arsenic (As), mercury (Hg), cadmium (Cd), chromium (Cr), cyanide (CN), potassium (K), calcium (Ca), iron (Fe), and chlorine (Cl).

10. The method of claim 5, wherein, in the operation of producing sodium bicarbonate, a primary waste including 3 mg/L or less of the impurity is generated.

11. The method of claim 5, wherein, in the operation of producing gypsum, a secondary waste containing 1.1 mg/L or less of the impurity is generated.

12. The method of claim 5, wherein
the operation of producing sodium bicarbonate includes:
dissolving a desulfurization waste in water and introducing an impurity elution inhibitor to produce a mixture;
separating the mixture into a solid and a liquid to obtain the material; and
introducing ammonia water and carbon dioxide to the material to carbonate the material to produce sodium bicarbonate.

13. The method of claim 5, wherein
the operation of producing gypsum includes:
an operation of introducing a calcium-containing substance to the waste liquid to obtain a slurry;
an operation of removing ammonia from the slurry and then adding an acidic solution to obtain a second mixture; and
an operation of separating the second mixture into a solid and a liquid to produce gypsum.
